# EUROPÄISCHE PATENTSCHRIFT

(11) **EP 0 619 229 B1**
(45) Veröffentlichungstag und Bekanntmachung des Hinweises auf die Patenterteilung: **15.10.1997**
(21) Anmeldenummer: 94810176.1
(22) Anmeldetag: 23.03.1994
(51) Int. Cl.: B65B 23/12, B65G 47/71, B65G 47/76

(54) **Vorrichtung zum Aufteilen scheibenförmiger Produkte auf mehrere Ausgangskolonnen**
Device for dividing flat products on several exit columns
Dispositif pour diviser des produits plats sur plusieurs colonnes de sortie

(30) Priorität: 05.04.1993 CH 1035/93
(43) Veröffentlichungstag der Anmeldung: 12.10.1994
(73) Patentinhaber: SIG Schweizerische Industrie-Gesellschaft, 8212 Neuhausen am Rheinfall (CH)
(72) Erfinder: Wipf, Alfred, D-79798 Jestetten (DE)
(74) Vertreter: Münch, Otto

(56) Entgegenhaltungen:
- DE-U- 9 003 468
- US-A- 5 042 636

## Beschreibung

In den US-A-5 042 636 ist eine Vorrichtung zum Aufteilen von Produkten von einer kontinuierlich angelieferten Eingangskolonne auf mehrere Ausgangskolonnen beschrieben. Oberhalb eines Förderbandes, auf welchem die Produkte transportiert werden, ist eine kontinuierlich umlaufende, endlose Kette geneigt zur Förderrichtung des Bandes angeordnet. An der Kette ist eine Vielzahl von regelmässig beabstandeten Fahnen befestigt, welche durch eine Steuerrichtung jeweils ausserhalb des einen Randes des Bandes wahlweise aus einer angehobenen in eine abgesenkte Stellung schwenkbar sind. Bevor die Fahnen den anderen Bandrand erreichen, werden alle abgesenkten Fahnen in die angehobene Stellung zurückgeschwenkt. Die abgesenkten Fahnen verschieben die angeförderten Produkte seitlich in eine andere Bahn. Diese Vorrichtung ist kompliziert aufgebaut und deshalb aufwendig in der Herstellung und im Unterhalt.

Im DE-U-9 003 468 ist eine andere Vorrichtung beschrieben, mit welcher eine auf einem Förderband angelieferte Kolonne von Gefässen in mehrere Ausgangskolonnen aufgeteilt werden kann. In einer ersten Station wird wahlweise eine Gruppe von Gefässen mittels eines Stössels quer zur Transportrichtung in eine andere Spur verschoben. Aus dieser Spur können die Gefässe mittels eines Leitelementes wahlweise in eine von mehreren Ausgangsspuren abgelenkt werden. Das Leitelements ist dazu um eine vertikale Achse schwenkbar. In der ersten Station kann der Stössel allerdings nur dann aus der ausgeruckten in die Grundstellug zurückgezogen werden, wenn sich keine Gefässe in seinem Erfassungsbbereich befinden. Trifft diese Bedingung nicht zu, werden die betreffenden Gefässe über den Rand des Förderbandes abgeschoben, was zu Betreibsstörungen führt. Währen der Schwenkbewegung des Leitelementes kann ein Gefäss dessen stromabwärtiges Ende gerade verlassen. Dieses Gefäss gelangt dann nicht in die vorgesehene Ausgangskolonne, was ebenfalls zu Betriebsstörungen führt.

Der vorliegenden Erfindung liegt die Aufgabe zugrunde, eine Vorrichtung zum Aufteilen von flachliegenden, scheibenförmigen Produkten, insbesondere Biskuits oder Schokoladestückchen, von einer kontinuierlich angelieferten Eingangskolonne auf mehrere Ausgangskolonnen anzugeben, mit welcher die Produkte schonend behandelt werden, und mit welcher bei hoher Förderleistung eine hohe Betriebssicherheit erzielt wird. Diese Aufgabe wird durch die Merkmalskombination des Anspruchs 1 gelöst. Nachfolgend wird ein Ausführungsbeispiel der Erfindung anhand der Zeichnungen erläutert. Darin zeigt:
- Figuren 1 und 2: eine Draufsicht auf eine erfindungsgemässe Vorrichtung in zwei verschiedenen Stellungen des Ablenkriemens,
- Figur 3: eine Innenansicht des Ablenkriemens,
- Figur 4: einen Schnitt längs der Linie IV-IV in Figur 1, und
- Figur 5: eine Variante zum Aufteilen in mehr als zwei Kolonnen.

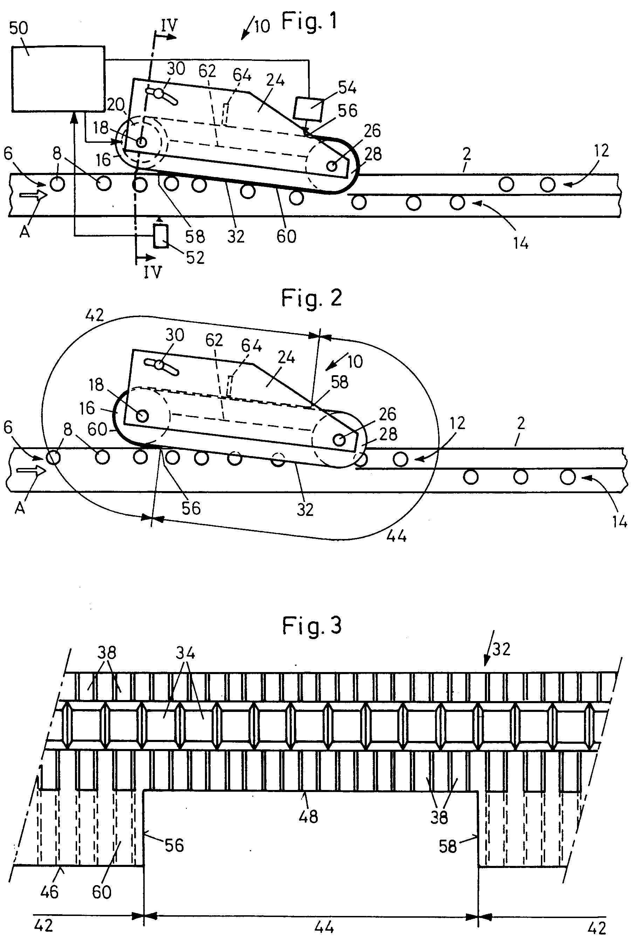

Die dargestellte Vorrichtung umfasst ein Förderband 2 mit einem horizontalen, oberen Trum, auf dessen Oberseite 4 eine ausgerichtete Eingangskolonne 6 von Biskuits 8 in unregelmässigen Abständen in Förderrichtung A angeliefert wird. Eine Ablenkvorrichtung 10 verteilt diese Eingangskolonne 6 auf zwei Ausgangskolonnen 12, 14. Die Vorrichtung 10 umfasst ein seitlich des Bandes angeordnetes Antriebsrad 16, das mit der Abtriebswelle 18 eines Servomotors 20 verbunden ist. Die Achse 22 der Welle 18 ist vertikal. Auf einem um die Achse 22 schwenkbaren Arm 24 ist die zur Achse 22 parallele Achse 26 eines Umlenkrades 28 befestigt. Das Rad 28 ist in der Draufsicht (Figuren 1 und 2) teilweise oberhalb des Förderbandes 2. Der Arm 24 ist mittels einer Schraube 30 arretierbar, um die Vorrichtung 10 auf unterschiedliche Formate oder Durchmesser der Biskuits 8 einstellen zu können. Um die Räder 16, 28 ist ein Zahnriemen 32 geführt.

Der Zahnriemen 32 hat auf seiner einen Seite innen Stollen 34, die in Nuten 36 der Räder 16, 28 zur Seitenführung des Riemens 32 eingreifen. Beidseits der Stollen 34 erstrecken sich Zähne 38, welche mit Zähnen 40 des Antriebsrades 16 kämmen. Der Riemen 32 hat einen Ablenkabschnitt 42 und einen Durchlassabschnitt 44. Im Ablenkabschnitt 42 erstreckt sich der untere Rand 46 des Riemens 32 bis unmittelbar oberhalb der Ebene der Oberfläche 4 des Förderbandes 2. Die Zähne 38 können zur Versteifung des Ablenkabschnittes 42 bis an diesen unteren Rand 46 verlängert sein, was in Figur 3 gestrichelt angedeutet ist. Im Durchlassabschnitt 44 ist der untere Rand 48 demgegenüber um etwas mehr als die maximale Dicke der Biskuits 8 oberhalb der Oberfläche 4. Die beiden Abschnitte 42, 44 sind etwa gleich lang, erstrecken sich also je etwa über die Hälfte des Umfangs des Riemens 32.

Zur Steuerung des Motors 20 dient eine Steuereinrichtung 50. Sie erhält Signale von zwei Reflex-Lichtschranken 52, 54. Die Lichtschranke 52 fühlt benachbart dem Antriebsrad 16 die Zwischenräume zwischen benachbarten Biskuits 8, um jeweils den Motor 20 so zu starten, dass die Vorderkante 56 oder die Hinterkante 58 des Ablenkabschnitts 42 synchron mit einem solchen Zwischenraum mitläuft, um das Band 32 entweder in die in Figur 1 gezeigte Ablenkstellung oder die in Figur 2 gezeigte Durchlasstellung zu drehen. In Figuren 1 und 2 ist jeweils der über den unteren Rand 48 des Durchlassabschnittes 44 vorstehende Lappen 60 des Ablenkabschnittes 42 zur Verdeutlichung etwas vorstehend dargestellt. Die Lichtschranke 54 fühlt die Vorderund Hinterkante 56, 58 des Ablenkabschnittes 42, um den Motor 20 jeweils derart anzuhalten, dass entweder die Hinterkante 58 (Figur 1) oder die Vorderkante 56 (Figur 2) benachbart dem Antriebsrad 16 unmittelbar am Rand des Bandes 2 anhält.

In der Stellung nach Figur 1 werden alle auf der Eingangskolonne 6 ankommenden Biskuits 8 durch den Lappen 60 in die Ausgangskolonne 14 abgelenkt. Zur Abstützung des Lappens 60 im Ablenkbereich kann noch ein Stützkörper 62 am Arm 24 befestigt sein. Der Stützkörper 62 kann eine zusätzliche Nut zur Führung der Stollen 34 haben. Soll die Ausgangskolonne 12 beliefert werden, wird beim Durchlauf eines Zwischenraums zwischen den Biskuits 8 an der Hinterkante 58 der Motor 20 eingeschaltet, sodass der Riemen 32 synchron mit dem Band 2 mitläuft, bis er einen halben Umgang durchgeführt hat und nun die Vorderkante 56 an der Stelle steht, wo vorher die Hinterkante 58 war (Figur 2). Nun laufen alle Biskuits 8 unter dem Band 32 und dem Umlenkrad 28 durch in die Ausgangskolonne 12.

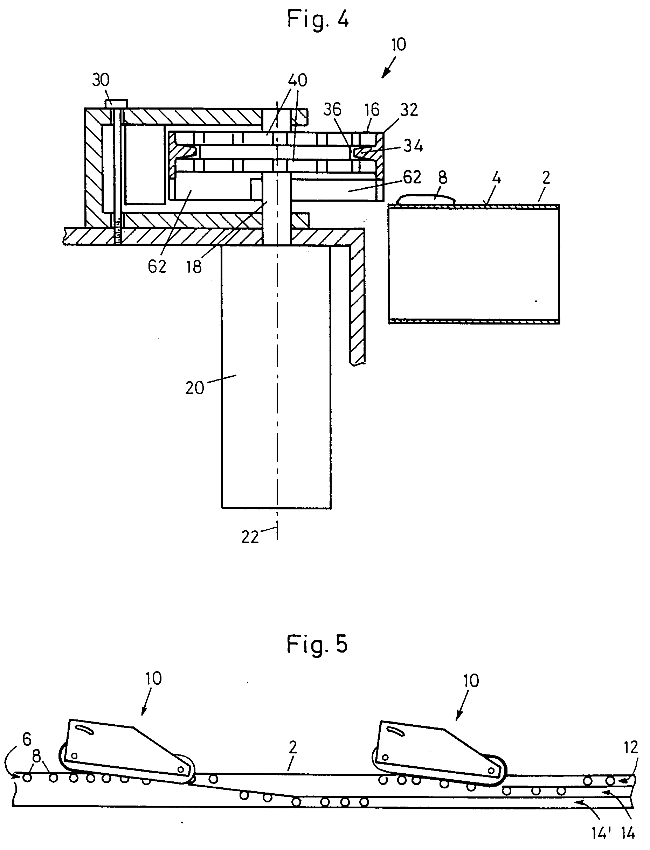

Die Steuerung 50 kann einen Zähler enthalten, der die Umschaltung nach jeweils einer wählbaren ersten und zweiten Anzahl der mit der Lichtschranke 52 festgestellten Lücken bewirkt. Damit können die Biskuits 8 in einem wählbaren Verhältnis von z.B. 1:1 oder 2:1 auf die beiden Kolonnen 12, 14 aufgeteilt werden. Wenn die Biskuits 8 in regelmässigen Abständen eintreffen, kann zur gleichmässigen Aufteilung auf die beiden Ausgangskolonnen 12, 14 der Motor 20 auch konstant laufen, wobei er nur bei Durchgang der Vorder- oder Hinterkante 56, 58 durch die in Figuren 1 und 2 dargestellte Stellung jeweils zur Synchronisation mit den Lücken kurz gebremst oder beschleunigt wird. Zur Aufteilung der Eingangskolonne 6 auf mehr als zwei Ausgangskolonnen können auch mehrere Ablenkvorrichtungen 10 hintereinander angeordnet werden, was in Figur 5 dargestellt ist. Alternativ ist es auch möglich, den Arm 24 motorisch einstellbar vorzusehen. Dann kann jeweils in der Zeit, wo die Kolonne 12 beliefert wird, der Winkel des Arms 24 verstellt und anschliessend je nach Winkelstellung eine von zwei weiteren Ausgangskolonnen beliefert werden.

Mit der beschriebenen Vorrichtung wird eine sehr hohe Verteilleistung von z.B. 300 bis 2'000 Stück pro Minute, eine hohe Schaltleistung bei schonender Produktbehandlung und eindeutiger Zuordnung jedes Produktes in die beiden Kolonnen 12, 14 erreicht. Durch das Verschieben der Produkte über mehrere Taktlängen (z.B. 3-5) sind nur geringe seitliche Beschleunigungen erforderlich, sodass auch brüchige und weiche, empfindliche Produkte wie Biskuits, Schokolade oder verpackte Produkte ohne Störungen abgelenkt werden. Da pro Schaltung mehrere Produkte, z.B. 3-5, miteinander verschoben werden, sind weniger Synchronisierungen pro Minute nötig, was die Betriebssicherheit erhöht. Der Aufbau ist einfach, gut zugänglich und überblick- und kontrollierbar. Auf der dem Förderband 2 abgewandten Seite kann noch ein in Figur 2 angedeuteter Abstreifer 64 angebracht werden, der allfällige Biskuitreste von der Aussenseite des Lappens 60 abstreift. Dadurch ist die Vorrichtung selbstreinigend. Die Vorrichtung ist leicht einstellbar auf unterschiedliche Produktgrössen und -Formate. Die Lichtschranke 52 kann seitlich einstellbar angebracht werden oder ihr Signal kann mit einer einstellbaren Verzögerung weitergeleitet werden.

## Patentansprüche

1. Vorrichtung zum Aufteilen von flachliegenden, scheibenförmigen Produkten, insbesondere Biskuits oder Schokoladestückchen, von einer kontinuierlich angelieferten Eingangskolonne (6) auf mehrere Ausgangskolonnen (12, 14) , umfassend:
- ein Fördermittel (2) zum Transport der Produkte (8);
- ein oberhalb des Fördermittels (2) um Umlenkorgane (16, 28) geführtes, endloses Ablenkmittel (32), das über einen Ablenkabschnitt (42) bis unmittelbar oberhalb der Oberseite (4) des Fördermittels (2) ragt und über einen Durchlaufabschnitt (44) einen Abstand von dieser Oberseite (4) aufweist, der grösser ist als die Dicke der Produkte (8), wobei eine Ablenkbereich des Ablenkmittels (32) zur Förderrichtung (A) des Fördermittels (2) geneigt verläuft, wobei der Ablenkabschnitt (42) einen mit dem Ablenkmittel (32) fest verbundenen Vorsprung (60) aufweist, welcher die Unterkante (48) des Durchlaufabschnitts (44) überragt;
- einen Motor (20) zum Antrieb des Ablenkmittels (32); und
- eine Steuereinrichtung (50) zur Steuerung des Motors (20).

2. Vorrichtung nach Anspruch 1, wobei das Ablenkmittel (32) nur einen einzigen Ablenkabschnitt (42) und nur einen einzigen Durchlaufabschnitt (44) aufweist und die Ablenkabschnittlänge vorzugsweise annähernd gleich der Durchlaufabschnittlänge ist.

3. Vorrichtung nach Anspruch 1 oder 2, wobei die Umlenkorgane durch ein mit dem Motor (20) verbundenes Antriebsrad (16) und ein Umlenkrad (28) gebildet sind.

4. Vorrichtung nach einem der Ansprüche 1-3, wobei der Ablenkbereich des Ablenkmittels (32) um 7° bis 20° gegenüber der Förderrichtung (A) des Fördermittels (2) geneigt ist, und wobei dieser Winkel vorzugsweise durch Schwenken um eine Achse (22) des stromaufwärtigen Umlenkorgans (16) einstellbar ist.

5. Vorrichtung nach einem der Ansprüche 1-4, wobei das Ablenkmittel ein Band (32) ist und vorzugsweise aus Polyamid besteht.

6. Vorrichtung nach Anspruch 5, wobei das Band (32) beabstandet von seinem unteren Rand (46, 48) Seitenführungsmittel (34) aufweist.

7. Vorrichtung nach Anspruch 5 oder 6, wobei das Band (32) als Zahnriemen ausgebildet ist, und wobei die Zähne (38) des Zahnriemens im Bereich des Ablenkabschnittes (42) vorzugsweise als Versteifung wirken.

8. Vorrichtung nach einem der Ansprüche 1-7, wobei benachbart dem stromaufwärtigen Umlenkorgan (16) ein erster Fühler (52) zum Feststellen der Zwischenräume zwischen den Produkten (8) angeordnet ist, der mit der Steuereinrichtung (50) verbunden ist, um den Motor (20) zu steuern.

9. Vorrichtung nach einem der Ansprüche 1-8, wobei längs des Umfangs des Ablenkmittels (32) ein zweiter Fühler (54) angeordnet ist, der den Uebergang vom Ablenkabschnitt (42) zum Durchlaufabschnitt (44) abtastet, um über die Steuereinrichtung (50) den Motor (20) in einer vorbestimmten Stellung des Ablenkmittels (32) zu stoppen.

10. Vorrichtung nach einem der Ansprüche 1-9, wobei im Ablenkbereich ein Stützorgan (62) zum Abstützen des Ablenkmittels (32) in vertikaler und horizontaler Richtung vorhanden ist.

11. Vorrichtung nach einem der Ansprüche 1-10, wobei mehrere Ablenkmittel (32) hintereinander geschaltet sind.

## Claims

1. Apparatus for dividing up flat, disc-shaped products, in particular biscuits or pieces of chocolate, between a plurality of outlet columns (12, 14) from a continuously supplied inlet column (6), comprising:
- a conveying means (2) for transporting the products (8);
- an endless deflecting means (32) which is guided, around return elements (16, 28), above the conveying means (2) and, over a deflecting section (42), projects to a point immediately above the top side (4) of the conveying means (2) and, over a through-passage section (44), is spaced apart from said top side (4) by a distance which is greater than the thickness of the products (8), a deflecting region of the deflecting means (32) running in an inclined manner with respect to the conveying direction (A) of the conveying means (2), and the deflecting section (42) having a protrusion (60) which is connected fixedly to the deflecting means (32) and projects beyond the bottom edge (48) of the through-passage section (44);
- a motor (20) for driving the deflecting means (32); and
- a control device (50) for controlling the motor (20).

2. Apparatus according to Claim 1, the deflecting means (32) having only a single deflecting section (42) and only a single through-passage section (44), and the length of the deflecting section preferably being approximately equal to the length of the through-passage section.

3. Apparatus according to Claim 1 or 2, the return elements being formed by a drive wheel (16), connected to the motor (20), and by a return wheel (28).

4. Apparatus according to one of Claims 1-3, the deflecting region of the deflecting means (32) being inclined by 7° to 20° with respect to the conveying direction (A) of the conveying means (2), and it being possible for this angle to be set preferably by a pivoting action around an axis (22) of the upstream return element (16).

5. Apparatus according to one of Claims 1-4, the deflecting means being a belt (32) and consisting preferably of polyamide.

6. Apparatus according to Claim 5, the belt (32) having lateral-guidance means (34), the latter being spaced apart from the bottom belt border (46, 48).

7. Apparatus according to Claim 5 or 6, the belt (32) being designed as a toothed belt, and, in the region of the deflecting section (42), the teeth (38) of the toothed belt acting preferably as stiffening means.

8. Apparatus as claimed in Claims 1-7, there being arranged adjacent to the upstream return element (16) a first sensor (52) which is intended for detecting the interspaces between the products (8) and is connected to the control device (50) in order to control the motor (20).

9. Apparatus according to one of Claims 1-8, there being arranged along the periphery of the deflecting means (32) a second sensor (54), which senses the transition from the deflecting section (42) to the through-passage section (44) in order, via the control device (50), to stop the motor (20) in a predetermined position of the deflecting means (32).

10. Apparatus according to one of Claims 1-9, a supporting element (62) being provided in the deflecting region for the purpose of supporting the deflecting means (32) in the vertical and horizontal directions.

11. Apparatus according to one of Claims 1-10, a plurality of deflecting means (32) being arranged one behind the other.

## Revendications

1. Dispositif pour diviser des produits plats, posés à plat, en particulier des biscuits ou des morceaux de chocolat, depuis une colonne d'entrée (6) approvisionnée en continu sur plusieurs colonnes de sortie (12, 14), comprenant:
- un moyen de transport (2) pour le transport des produits (8);
- un moyen de déviation sans fin (32), mené autour d'organes de déviation (16, 28) au-dessus du moyen de transport (2), qui s'étend sur un tronçon de déviation (42) jusqu'immédiatement au-dessus de la face supérieure (4) du moyen de transport (2) et présente sur un tronçon de passage (44) une distance par rapport à cette face supérieure (4), qui est supérieure à l'épaisseur des produits (8), dans lequel une zone de déviation du moyen de déviation (32) est inclinée par rapport à la direction de transport (A) du moyen de transport (2), dans lequel le tronçon de déviation (42) présente une saillie (60) fermement assemblée au moyen de déviation (32), qui dépasse l'arête inférieure (48) du tronçon de passage (44);
- un moteur (20) pour l'entraînement du moyen de déviation (32); et
- un dispositif de commande (50) pour la commande du moteur (20).

2. Dispositif suivant la revendication 1, dans lequel le moyen de déviation (32) ne présente qu'un seul tronçon de déviation (42) et un seul tronçon de passage (44) et la longueur du tronçon de déviation est de préférence approximativement égale à la longueur du tronçon de passage.

3. Dispositif suivant la revendication 1 ou 2, dans lequel les organes de déviation sont formés par une roue de commande (16) reliée au moteur (20) et une roue de déviation (28).

4. Dispositif suivant l'une quelconque des revendications 1-3, dans lequel la zone de déviation du moyen de déviation (32) est inclinée de 7° à 20° par rapport à la direction de transport (A) du moyen de transport (2), et dans lequel cet angle est réglable de préférence par branchement autour d'un axe (22) de l'organe de déviation amont (16).

5. Dispositif suivant l'une quelconque des revendications 1-4, dans lequel le moyen de déviation est une bande (32) et se compose de préférence de polyamide.

6. Dispositif suivant la revendication 5, dans lequel la bande (32) présente des moyens de guidage latéral (34) à distance de son bord inférieur (46, 48).

7. Dispositif suivant la revendication 5 ou 6, dans lequel la bande (32) est constituée par une courroie dentée, et dans lequel les dents (38) de la courroie dentée ont de préférence un rôle de raidisseurs dans la zone du tronçon de déviation (42).

8. Dispositif suivant l'une quelconque des revendications 1-7, dans lequel un premier palpeur (52) est disposé au voisinage de l'organe de déviation amont (16), pour détecter les espaces intermédiaires entre les produits (8), et est relié au dispositif de commande (50), pour commander le moteur (20).

9. Dispositif suivant l'une quelconque des revendications 1-8, dans lequel un second palpeur (54) est disposé le long du périmètre du moyen de déviation (32), qui détecte la transition entre le tronçon de déviation (42) et le tronçon de passage (44), pour arrêter le moteur (20), par l'intermédiaire du dispositif de commande (50), dans une position prédéterminée du moyen de déviation (32).

10. Dispositif suivant l'une quelconque des revendications 1-9, dans lequel il existe, dans la zone de déviation, un organe d'appui (62) pour soutenir le moyen de déviation (32) en direction verticale et horizontale.

11. Dispositif suivant l'une quelconque des revendications 1-10, dans lequel plusieurs moyens de déviation (32) sont montés l'un derrière l'autre.
